Europäisches Patentamt

European Patent Office

Office européen des brevets

(19)

(11) Veröffentlichungsnummer: **0 058 763**
**A1**

## EUROPÄISCHE PATENTANMELDUNG

(12)

(21) Anmeldenummer: 81109317.8

(22) Anmeldetag: **30.10.81**

(51) Int. Cl.³: **G 03 B 27/18,** G 01 D 15/14

(30) Priorität: **25.02.81 DE 3106916**

(43) Veröffentlichungstag der Anmeldung: **01.09.82**
**Patentblatt 82/35**

(84) Benannte Vertragsstaaten: **AT BE CH FR GB IT LI NL SE**

(71) Anmelder: **DR.-ING. RUDOLF HELL GmbH,**
**Grenzstrasse 1-5, D-2300 Kiel 14 (DE)**

(72) Erfinder: **Penza, Hans, Matthias-Claudius-Strasse 30,**
**D-2308 Preetz (DE)**
Erfinder: **Segler, Siegfried, Neuwührenerweg 10,**
**D-2301 Raisdorf (DE)**

(54) **Vorrichtung zum Andrücken von Aufzeichnungsmaterial.**

(57) Die Erfindung betrifft eine Vorrichtung zum Andrücken von Aufzeichnungsmaterial an die Lichtaustrittsfläche eines Aufzeichnungsorgans bei einem Reproduktionsgerät, insbesondere an die Lichtaustrittsfläche (6) eines Bildrohres (2) mit Fiberglasplatte (3).

Die Oberfläche von Fiberglasplatten ist fertigungsbedingt gekrümmt, so daß das Aufzeichnungsmaterial bei herkömmlichen Andruck-Vorrichtungen nicht überall plan an der Lichtaustrittsfläche anliegt und Unschärfe bei der Belichtung auftritt.

Bei der vorgeschlagenen neuen Andruck-Vorrichtung ist eine schwenkbare Trägerplatte (8) vorgesehen, die an der der Lichtaustrittsfläche zugewandten Unterseite (9) eine Vielzahl von über die Unterseite (9) verteilten Hohlräumen (10) aufweist. In den Hohlräumen befinden sich leicht bewegliche Andruckgewichte (11). Die Unterseite der Trägerplatte ist lose mit einem Filz- oder Samttuch (12) bespannt, unter dem das Aufzeichnungsmaterial (4) durchgleitet. Die Andruckgewichte passen sich an die unterschiedlichen Krümmungen der Lichtaustrittsfläche der Fiberglasplatte an und sorgen auf der ganzen Fläche für eine plane Anlage des Aufzeichnungsmaterials.

Dr.-Ing. Rudolf Hell GmbH
Grenzstraße 1-5
2300 Kiel 14

Kiel, den 16. Februar 1981
Sf/To

Patentanmeldung Nr. 81/557

Kennwort: "Andruck-Vorrichtung"

<u>Vorrichtung zum Andrücken von Aufzeichnungsmaterial</u>

Die Erfindung betrifft eine Vorrichtung zum Andrücken von Aufzeichnungsmaterial an die Lichtaustrittfläche eines Aufzeichnungsorgans bei einem Reproduktionsgerät, z. B. bei einem
elektronischen Lichtsatzgerät.

Ein elektronisches Lichtsatzgerät stellt mit Hilfe einer
Elektronenstahlröhre Lichtsätze aus digital gespeicherten
Schriftzeichen her. Die aus dem Speicher abgerufenen Schriftzeichen werden durch Hell-Dunkel-Steuerung des Elektronenstrahls punkt- und zeilenweise auf dem Leuchtschirm der
Elektronenstrahlröhre aufgezeichnet und die Schirmbilder
mittels eines Schreibobjektivs auf ein Aufzeichnungsmedium
in Form von Film oder Fotopapier abgebildet und belichtet,
wobei sich das Aufzeichnungsmedium kontinuierlich oder
schrittweise an dem Leuchtschirm vorbeibewegt.

Da die Schreibobjektive teuer sind, werden für preisgünstigere

- 2 -

Lichtsatzgeräte Elektronenstrahlröhren verwendet, deren Frontplatten aus Fiberglas (Fiberglasplatte) bestehen. Das zu
belichtende Aufzeichnungsmedium bewegt sich über die
Lichtaustrittsfläche der Fiberglasplatte und das Schirmbild
wird über die Fiberglasplatte auf das Aufzeichnungsmedium
übertragen. Für eine gute Anlage des Aufzeichnungsmediums auf
der Lichtaustrittsfläche der Fiberglasplatte sorgt eine
mechanische Andruck-Vorrichtung.

Bei der Fertigung derartiger Elektronenstrahlröhren mit Fiberglasplatte hat es sich herausgestellt, daß sich die an sich
plan hergestellte Lichtaustrittsfläche einer Fiberglasplatte
beim Verkleben mit dem Leuchtschirm und beim Evakuieren der
Elektronenstrahlröhre krümmt oder wölbt. Herkömmliche Andruck-
Vorrichtungen haben den Nachteil, daß im Falle von verformten
Lichtaustrittsöffnungen keine sichere Anlage des Aufzeichnungsmediums an jeder Stelle der Lichtaustrittsöffnung gewährleistet
ist. Dadurch wird aber das Schirmbild bereichsweise unscharf auf
dem Aufzeichnungsmedium abgebildet, was zu einer schlechten
Reproduktionsqualität führt.

Die formmäßige Anpassung jeder Andruckplatte an die unterschiedlichen Wölbungen der Lichtaustrittsflächen der einzelnen
Fiberglasplatten ist zu aufwendig.

Der in Anspruch 1 angegebenen Erfindung liegt daher die Aufgabe
zu Grunde, eine Vorrichtung zum Andrücken von Aufzeichnungsmaterial an die Lichtaustrittsfläche eines Aufzeichnungsorgans
anzugeben, die sich individuell an die unterschiedlichen
Krümmungen oder Wölbungen der Lichtfaserplatte anpaßt.

Die Erfindung wird anhand der Figuren 1 bis 3 näher erläutert.
Es zeigen:

Figur 1 ein erstes Ausführungsbeispiel für eine Andruck-Vorrichtung im Querschnitt;

Figur 2 eine zweite Ausführungsform der Andruck-Vorrichtung im
Querschnitt;

Figur 3 einen weiteren Querschnitt durch die Andruck-Vorrichtung.

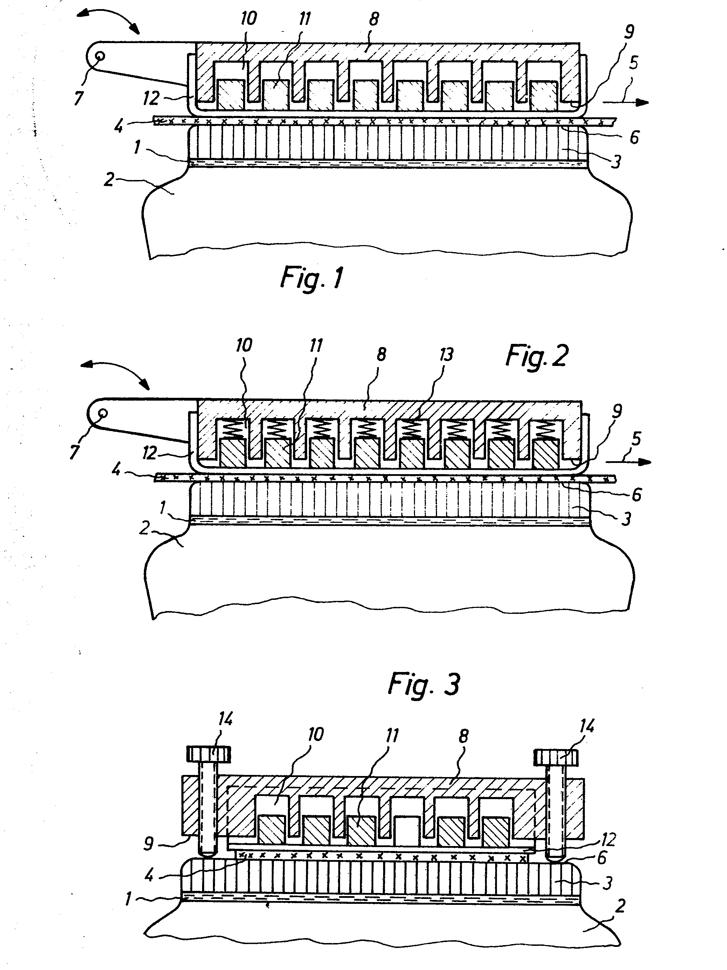

Figur 1 zeigt den Querschnitt der Andruck-Vorrichtung in Durchlaufrichtung des Aufzeichnungsmaterials im Zusammenwirken mit dem
Aufzeichnungsorgan.

Auf dem Leuchtschirm 1 einer Elektronenstrahlröhre 2 als Aufzeichnungsorgan ist eine Fiberglasplatte 3 angebracht. Ein Aufzeichnungsmedium 4 in Form eines Films oder Fotopapiers bewegt sich
in Richtung eines Pfeiles 5 über die Lichtaustrittsfläche 6 der

- 4 -

Fiberglasplatte 3 hinweg. Die Lichtaustrittsfläche 6 möge auf Grund von Herstellungsfehlern gewölbt sein (nicht dargestellt).

Die Andruck-Vorrichtung besteht aus einer um eine Achse 7 drehbaren Trägerplatte 8, die an der der Lichtaustrittsfläche 6 zugewandten Unterseite 9 eine Vielzahl von dicht nebeneinanderliegenden über die gesamte Unterseite 9 gleichmäßig verteilten Hohlräumen 10, z. B. in Form von Sacklöchern aufweist. In den Hohlräumen 10 befinden sich leicht verschiebbare und an das bewegliche Aufzeichnungsmedium 4 andrückbare Körper 11.

In dem ersten Ausführungsbeispiel, bei dem die Lichtaustrittfläche 6 vorzugsweise waagerecht angeordnet ist, sind die Körper 11 Andruckgewichte, die durch ihr Gewicht auf das Aufzeichnungsmedium 4 bzw. auf die Lichtaustrittsfläche 6 drücken. Ein Stoff 12, z. B. ein Samttuch oder ein Filztuch, ist lose über die Unterseite 9 der Trägerfläche 8 gespannt und an den Seiten mit der Trägerplatte 8 verklebt. Das Samt- oder Filztuch ist nachgebend und leicht verformbar, wodurch es sich gut an die Wölbungen der Lichtaustrittsfläche 6 anpaßt und den Druck der Andruckgewichte gleichmäßig auf die Lichtaustrittfläche 6 verteilt. Das Samt- oder Filztuch weist auch gute Gleiteigenschaften auf, so daß der Andruck ohne Beschädigungen des empfindlichen Aufzeichnungsmaterials 4 erfolgt. Das Samt- oder Filztuch sorgt außerdem dafür, daß die Andruckgewichte nicht aus der Trägerplatte 8 herausfallen.

Figur 2 zeigt ein zweites Ausführungsbeispiel für die Andruck-Vorrichtung ebenfalls in einer Querschnittsdarstellung. Im zweiten Ausführungsbeispiel, bei dem die Lichtaustrittsfläche 6 vorzugsweise in Schräglage oder senkrecht angeordnet ist, wird der Andruck der Körper 11 an das Aufzeichnungsmaterial 4 vorzugsweise durch Druckfedern 13 erreicht, die sich an der Trägerplatte 8 abstützen.

Figur 3 zeigt einen Querschnitt durch die Andruck-Vorrichtung senkrecht zur Durchlaufrichtung des Aufzeichnungsmediums 4.

Vorzugsweise weist die Trägerplatte 8 einstellbare Distanzstücke 14, z. B. Schrauben, auf, die seitlich vom Aufzeichnungsmedium 4 angebracht sind und sich auf der Lichtaustrittsfläche 6 abstützen. Dadurch wird erreicht, daß das Gewicht der Trägerplatte 8 keinen Einfluß auf den Andruck des Aufzeichnungsmediums hat, sondern das dieser ausschließlich durch die Körper 11 bestimmt wird. Die Trägerplatte 8 dient somit lediglich zur Führung der Körper 11 in den Hohlräumen 10.

Anstelle der Vielzahl von Körpern 11 könnte auch ein flacher Beutel verwendet werden, der zum Beispiel mit Sand oder einer Flüssigkeit gefüllt ist.

`0058763`

Dr.-Ing. Rudolf Hell GmbH
Grenzstraße 1-5

2300 Kiel 14

16.Februar 1981
Sf/To

Patentanmeldung 81/557

Kennwort: "Andruck-Vorrichtung"

## Patentansprüche

1. Vorrichtung zum Andrücken von Aufzeichnungsmaterial an die Lichtaustrittsfläche eines Aufzeichnungsorgans bei einem Reproduktionsgerät, dadurch gekennzeichnet, daß eine sich mindestens über die Lichtaustrittsfläche (6) erstreckende Trägerplatte (8) vorgesehen ist, die an der der Lichtaustrittsfläche (6) zugewandten Unterseite (9) eine Vielzahl von über die Unterseite (9) verteilte Hohlräume (10) aufweist, daß sich in den Hohlräumen (10) verschiebbare, an das bewegliche Aufzeichnungsmaterial (4) andrückbare Körper (11) befinden und daß die Unterseite (9) mit einem verformbaren Stoff (12) bedeckt ist, über den das bewegliche Aufzeichnungsmaterial (4) gleitet.

2. Vorrichtung nach Anspruch 1, dadurch gekennzeichnet, daß die Körper (11) Andruckgewichte sind.

3. Vorrichtung nach Anspruch 1, dadurch gekennzeichnet, daß die Körper (11) mittels an der Trägerplatte (8) abgestützten Federn (13) andrückbar sind.

4. Vorrichtung nach einem der Ansprüche 1-3, dadurch gekennzeichnet, daß der Stoff (12) Samt oder Filz ist.

5. Vorrichtung nach einem der Ansprüche 1-4, dadurch gekennzeichnet, daß die Trägerplatte (8) drehbar gelagert und
gegenüber der Lichtaustrittsfläche (6) verschwenkbar ist.

6. Vorrichtung nach einem der Ansprüche 1-5, dadurch gekennzeichnet, daß die Trägerplatte (8) mindestens ein verstellbares Distanzstück (4) aufweist, mit dem die Trägerplatte (8)
gegen die Lichtaustrittsfläche (6) abgestützt wird.

Dr.-Ing. Rudolf Deb GmbH
23 Kiel, Grenzstraße 1-5
Telefon

0058763

1/1

**Fig. 1**

**Fig. 2**

**Fig. 3**

Patentanmeldung Nr. 81/557.

0058763

<table>
<tr><td colspan="2">Europäisches Patentamt</td><td>**EUROPÄISCHER RECHERCHENBERICHT**</td><td>Nummer der Anmeldung<br>EP 81 10 9317</td></tr>
</table>

<table>
<tr>
<th colspan="3">EINSCHLÄGIGE DOKUMENTE</th>
<th>KLASSIFIKATION DER ANMELDUNG (Int. Cl.)</th>
</tr>
<tr>
<th>Kategorie</th>
<th>Kennzeichnung des Dokuments mit Angabe, soweit erforderlich, der maßgeblichen Teile</th>
<th>betrifft Anspruch</th>
<th rowspan="8">G 03 B 27/18<br>G 01 D 15/14</th>
</tr>
<tr>
<td>Y</td>
<td>US - A - 4 177 469 (D.M. PETERSON)<br><br>* Spalte 1, Zeile 60 bis Spalte 2, Zeile 3; Figur *</td>
<td>1</td>
</tr>
<tr>
<td>Y</td>
<td>* Spalte 2, Zeilen 34-40 *<br>- - -</td>
<td>5</td>
</tr>
<tr>
<td>Y</td>
<td>US - A - 3 867 031 (N.L. HAKANSON)<br><br>* Spalte 8, Zeilen 24-33; Figur 2 *<br>- - -</td>
<td>1</td>
</tr>
<tr>
<td>Y</td>
<td>US - A - 3 551 049 (W. LIMBERGER et al.)<br><br>* Spalte 8, Zeilen 1-7; Spalte 9, Zeilen 3-9, 19-30; Figur 2 *<br><br>& DE - A - 1 189.851<br>- - -</td>
<td>1-3</td>
</tr>
<tr>
<td>Y</td>
<td>DE - A - 2 802 423 (H. BEULICH)<br><br>* Seite 3, letzter Satz *<br>- - -</td>
<td>1,4</td>
</tr>
<tr>
<td>A</td>
<td>FR - A - 2 221 282 (I.B.M.)<br><br>* Seite 5, Zeilen 31-37 *<br>& IL - A - 2 312 846</td>
<td>1</td>
</tr>
</table>

RECHERCHIERTE SACHGEBIETE (Int. Cl.)

G 01 D 9/00
        15/14
        15/28
G 01 R 13/20
        1/42-
        1/48
        27/00-
        27/10
        27/18-
        27/22
        27/48
G 06 F 3/14
        3/153
H 01 J 31/00

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03.02.1982 | PRATSCH |

EPA form 1503.1 06.78